# EUROPÄISCHE PATENTSCHRIFT

(11) **EP 1 440 101 B1**
(45) Veröffentlichungstag und Bekanntmachung des Hinweises auf die Patenterteilung: **31.01.2007**
(21) Anmeldenummer: 02777199.7
(22) Anmeldetag: 25.09.2002
(51) Int. Cl.: C08G 18/10, C08G 18/42, C08G 18/80, C09D 175/06

(54) **POLYURETHAN, VERFAHREN ZU SEINER HERSTELLUNG UND SEINE VERWENDUNG**
POLYURETHANE, METHOD FOR PRODUCTION AND USE THEREOF
POLYURETHANE, SON PROCEDE DE PRODUCTION ET SON UTILISATION

(30) Priorität: 26.09.2001 DE 10147546
(43) Veröffentlichungstag der Anmeldung: 28.07.2004
(73) Patentinhaber: BASF Coatings AG, 48165 Münster (DE)
(72) Erfinder: SCHWARTE, Stephan, 48282 Emsdetten (DE); VESPER, Willi, 97353 Wiesentheid (DE); ANAYA-SANZ, Jose-Ignacio, 28804 Alcala de Henares, Madrid (ES); LEDANTEC, Alain, F-60300 Senlis (FR)
(86) Internationale Anmeldenummer: PCT/EP2002/010724
(87) Internationale Veröffentlichungsnummer: WO 2003/029319

(56) Entgegenhaltungen:
- EP-A- 0 583 777
- DE-A- 19 914 896
- GB-A- 1 280 404
- US-A- 4 532 177
- PATENT ABSTRACTS OF JAPAN vol. 017, no. 266 (C-1062), 25. Mai 1993 (1993-05-25) & JP 05 005080 A (MAZDA MOTOR CORP), 14. Januar 1993 (1993-01-14)

## Beschreibung

Die vorliegende Erfindung betrifft ein neues selbstvemetzendes, verzweigtes Polyurethan. Außerdem betrifft die vorliegende Erfindung ein neues Verfahren zur Herstellung eines selbstvernetzenden, verzweigten Polyurethans. Des weiteren betrifft die vorliegende Erfindung die Verwendung des neuen, selbstvernetzenden, verzweigten Polyurethans für die Herstellung nicht wässriger, farb- und/oder effektgebender Beschichtungsstoffe, insbesondere Basislacke, und Beschichtungen, insbesondere Basislackierungen.

Nicht wässrige Beschichtungsstoffe, die Polyester oder Polyurethane, Pigmente und Celluloseester enthalten, sind aus der britischen Patentanmeldung GB 2 156 829 A bekannt. Sie können zur Herstellung von farb- und/oder effektgebenden Mehrschichtlackierungen nach dem Nass-in-nass-Verfahren verwendet werden. Bekanntermaßen werden bei dem Nass-in-nass-Verfahren die Basislacke auf einem gegebenenfalls vorbeschichtetes Substrat appliziert, wonach man die resultierende Basislackschicht, ohne sie vollständig zu härten, trocknet und mit einem Klarlack überschichtet. Hiernach werden die Basislackschicht und Klarlackschicht gemeinsam gehärtet. Die Polyurethane werden aber in der britischen Patentanmeldung nicht näher spezifiziert, wohl aber die Polyester.

Bei dem vorbeschichteten Substrat kann es sich um ein Karosserieblech handeln, das mit einer üblichen und bekannten Elektrotauchlackierung und einer gehärteten Füllerlackierung beschichtet ist. Dies ist beispielsweise bei der Herstellung der Originallackierung (OEM) von Kraftfahrzeugen, insbesondere PKW, der Fall. Die bisher bekannten, nicht wässrigen Basislacke haften aber häufig nur schlecht auf den gehärteten Füllerlackierungen.

Die bisher bekannten, nicht wässrigen Basislacke haften häufig auch schlecht auf den Originallackierungen, wenn diese großflächig oder vollflächig in der Linie der Kraftfahrzeugherstellern reparaturlackiert werden müssen.

Bei dem Versuch, diese Nachteile durch Variation oder Austausch der Bindemittel zu beheben, kann es in unvorhersehbarer Weise zu einer Unverträglichkeit zwischen den Bindemitteln und den Celluloseestern kommen, die ausgesprochen nachteilig für die Lagerstabilität und die optischen und effektgebenden Eigenschaften (Appearance), die mechanischen Eigenschaften und die Haftungseigenschaften der hieraus hergestellten Beschichtungen ist.

Aufgabe der vorliegenden Erfindung ist es, ein neues, selbstvernetzendes, verzweigtes Polyurethan bereitzustellen, das die Nachteile des Standes der Technik nicht mehr länger aufweist, sondern das sich in einfacher Weise herstellen lässt und mit Celluloseestern, wie Celluloseacetobutyrat (CAB), sehr gut verträglich ist. Außerdem soll sich das neue, selbstvernetzende, verzweigte Polyurethan besonders gut für die Herstellung von lagerstabilen, nicht wässrigen, farb- und/oder effektgebenden Beschichtungsstoffen eignen, die Polyurethane, Pigmente und CAB enthalten. Die neuen, nicht wässrigen Beschichtungsstoffe sollen sich hervorragend als Basislacke zur Herstellung farb- und/oder effektgebender Mehrschichtlackierungen eignen, deren Zwischenschichthaftung auch nach Feuchtigkeitsbelastung, mechanische Belastbarkeit und Appearance von so hoher Qualität sind, dass sie ohne weiteres in Originallackierungen und großflächigen und vollflächigen Reparaturlackierungen von Automobilen der Oberklasse eingesetzt werden können.

Demgemäß wurde das neue, selbstvernetzende, verzweigte Polyurethan gefunden, das herstellbar ist, indem man
(A) mindestens einen hydroxylgruppenterminierten Polyester eines zahlenmittleren Molekulargewichts von 500 bis 4.000 Dalton, enthaltend, bezogen auf den Polyester (A),
   (a1) 60 bis 95 Gew.% an Struktureinheiten, die sich von aliphatischen Ausgangsprodukten ableiten, und
   (a2) 5 bis 40 Gew.% an Struktureinheiten, die sich von aromatischen Ausgangsprodukten ableiten,
   mit
(B) mindestens einem partiell blockierten Polyisocyanat, das im statistischen Mittel mehr als 1,5 und weniger als 3 freie Isocyanatgruppen im Molekül aufweist,
   wobei das Äquivalentverhältnis von freien Isocyanatgruppen im Polyisocyanat (B) zu Hydroxylgruppen im Polyester (A) > 1, zu einem isocyanatgruppenterminierten Polyurethan-Präpolymer umsetzt, das mit
(C) mindestens einer Verbindung, die im statistischen Mittel mindestens zwei isocyanatreaktiven funktionellen Gruppen im Molekül enthält, kettenverlängert und/oder blockiert wird.

Im folgenden wird das neue, selbstvernetzende, verzweigte Polyurethan als »erfindungsgemäßes Polyurethan« bezeichnet.

Außerdem wurde das neue Verfahren zur Herstellung von selbstvernetzenden, verzweigten Polyurethanen gefunden, bei dem man
(A) mindestens einen hydroxylgruppenterminierten Polyester eines zahlenmittleren Molekulargewichts von 500 bis 4.000 Dalton, enthaltend, bezogen auf den Polyester (A),
   (a 1) 60 bis 95 Gew.% an Struktureinheiten, die sich von aliphatischen Ausgangsprodukten ableiten, und
   (a 2) 5 bis 40 Gew.% an Struktureinheiten, die sich von aromatischen Ausgangsprodukten ableiten,
   mit
(B) mindestens einem partiell blockierten Polyisocyanat, das im statistischen Mittel mehr als 1,5 und weniger als 3 freie Isocyanatgruppen im Molekül aufweist,
   wobei das Äquivalentverhältnis von freien Isocyanatgruppen im Polyisocyanat (B) zu Hydroxylgruppen im Polyester (A) > 1, zu einem isocyanatgruppenterminierten Polyurethan-Präpolymer umsetzt, das mit
(C) mindestens einer Verbindung, die im statistischen Mittel mindestens zwei isocyanatreaktive funktionelle Gruppen im Molekül enthält, kettenverlängert und/oder blockiert wird.

Im folgenden wird das neue Verfahren zur Herstellung selbstvernetzender, verzweigter Polyurethane als »erfindungsgemäßes Verfahren« bezeichnet.

Außerdem wurde die neuen, nicht wässrigen Beschichtungsstoffe gefunden, enthaltend
(I) mindestens ein erfindungsgemäßes Polyurethan,
(II) mindestens ein farb- und/oder effektgebendes Pigment und
(III) mindestens einen Celluloseester.

Weitere Erfindungsgegenstände gehen aus der Beschreibung hervor.

Hinblick auf den Stand der Technik war es überraschend und für den Fachmann nicht vorhersehbar, dass die Aufgabe, die der vorliegenden Erfindung zugrundelag, mit Hilfe des erfindungsgemäßen Polyurethans gelöst werden konnte. Insbesondere war es überraschend, das sich das erfindungsgemäße Polyurethan mit Hilfe des erfindungsgemäßen Verfahrens in einfacher Weise herstellen ließ und mit Celluloseestern, wie Celluloseacetobutyrat (CAB), sehr gut verträglich war. Außerdem erwies sich das erfindungsgemäße Polyurethan als besonders gut geeignet für die Herstellung von lagerstabilen, nicht wässrigen, farb- und/oder effektgebenden Beschichtungsstoffen, die Polyurethane, Pigmente und CAB enthielten. Die neuen, nicht wässrigen Beschichtungsstoffe waren hervorragend als Basislacke zur Herstellung farb- und/oder effektgebender Mehrschichtlackierungen geeignet, deren Zwischenschichthaftung auch nach Feuchtigkeitsbelastung, mechanische Belastbarkeit und Appearance von so hoher Qualität waren, dass die erfindungsgemäßen Beschichtungen ohne weiteres in Originallackierungen und großflächigen und vollflächigen Reparaturlackierungen von Automobilen der Oberklasse eingesetzt werden konnten.

Das erfindungsgemäße Polyurethan ist selbstvemetzend.

Im Rahmen der vorliegenden Erfindung bezeichnet der Begriff "selbstvernetzend" die Eigenschaft eines Bindemittels, mit sich selbst Vemetzungsreaktionen einzugehen. Voraussetzung hierfür ist, daß in den Polyurethanen komplementäre reaktive funktionelle Gruppen enthalten sind, die miteinander reagieren und so zu einer Vernetzung führen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen. Vorliegend handelt es sich bei den reaktiven funktionellen Gruppen insbesondere um isocyanatreaktive funktionelle Gruppen, wie Thiolgruppen, Hydroxylgruppen und primäre und sekundäre Aminogruppen, insbesondere Hydroxylgruppen einerseits und blockierten Isocyanatgruppen andererseits.

Das erfindungsgemäße Polyurethan ist verzweigt. Vorzugsweise werden die Verzweigungen über die Polyisocyanate eingeführt, aus denen die erfindungsgemäßen Polyurethane hergestellt werden.

Vorzugsweise beträgt Hydroxylzahl des erfindungsgemäßen Polyurethans 60 bis 120, insbesondere 80 bis 100 mg KOH/g.

Es ist in üblichen und bekannten organischen Lösemittel löslich oder dispergierbar. Beispiele üblicher und bekannter Lösemittel werden in D. Stoye und W. Freitag, (Hrsg.), »Paints, Coatings and Solvents, 2nd Completely Revised Editon, Wiley-VCH, Weinheim New York, 1998, »14.9. Solvent Groups«, Seiten 327 bis 373, beschrieben.

Das erfindungsgemäße Polyurethan ist herstellbar, indem man mindestens einen hydroxylgruppenterminierten Polyester (A) mit mindestens einem partiell blockierten Polyisocyanat (B) umsetzt, wonach man das resultierende isocyanatgruppenterminierte Polyurethan-Präpolymer mit mindestens einer Verbindung (C) kettenverlängert und/oder blockiert.

Der Polyester (A) weist ein zahlenmittleres Molekulargewicht von 500 bis 4.000 und insbesondere 800 bis 3.000 Dalton auf. Er enthält, bezogen auf seine Gesamtmenge,
(a 1) 60 bis 95, vorzugsweise 70 bis 92 und insbesondere 75 bis 90 Gew.% an Struktureinheiten, die sich von aliphatischen Ausgangsprodukten ableiten, und
(a 2) 5 bis 40, vorzugsweise 8 bis 30 und insbesondere 10 bis 25 Gew. % an Struktureinheiten, die sich von aromatischen Ausgangsprodukten ableiten.

Bei den aliphatischen Ausgangsprodukten (a 1) handelt es sich um aliphatische und cycloaliphatische Carbonsäuren, Carbonsäureanhydride und andere zur Polykondensation befähigte Carbonsäurederivate und um aliphatische und cycloaliphatische Polyole.

Beispiele für geeignete erfindungsgemäß zu verwendende acyclische aliphatische Dicarbonsäuren (a 1) sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure, von denen Adipinsäure, Glutarsäure, Azelainsäure und/oder Sebacinsäure vorteilhaft sind und deshalb bevorzugt verwendet werden.

Beispiele für geeignete erfindungsgemäß zu verwendende cycloaliphatische Dicarbonsäuren (a 1) sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecan-Dicarbonsäure. Die cycloaliphtatischen Dicarbonsäuren können sowohl in ihrer cis- als auch in ihrer trans-Form sowie als Gemisch beider Formen eingesetzt werden.

Beispiele geeigneter Polyole (a 1) sind Diole und Triole, insbesondere Diole. Üblicherweise werden Triole neben den Diolen in untergeordneten Mengen verwendet, um Verzweigungen in die Polyester (A) einzuführen. Im Rahmen der vorliegenden Erfindung sind unter »untergeordneten Mengen« Mengen zu verstehen, die kein Gelieren der Polyesterpolyole bei ihrer Herstellung bewirken. Wie bereits erwähnt, werden die Verzweigungen aber vorzugsweise über die Polyisocyanate (B) eingeführt.

Beispiele geeigneter Diole (a 1) sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropan-diol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiof-1,3, 1-Dihydroxymethyl-bicyclo[2.2.1]heptan, 2,2-Diethylpro-pandiol-1,3, 2,2-Dipropylpropandiol-1,3, 2-Cyclo-hexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-hiydroxypropyl)-benzol oder 1,3-(2'-Hydroxypropyl)-benzol.

Von diesen Diolen (a 1) sind 1,6-Hexandiol und Neopentylglykol besonders vorteilhaft und werden deshalb besonders bevorzugt verwendet.

Beispiele geeigneter Triole (a 1) sind Trimethylolethan, Trimethylolpropan oder Glycerin, insbesondere Trimethylolpropan.

Beispiele für geeignete aromatische Polycarbonsäuren (a 2) sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele geeigneter aromatischer Polyole (a 2) sind Phenole, wie Brenzkatechin, Resorcin und Hydrochinon sowie in untergeordneten Mengen Pyrogallol, Phloroglucin und Hydroxyhydrochinon.

Es können aber auch Lactone (a 1), wie Caprolacton, oder cycloaliphatische Hydroxycarbonsäuren und Hydroxycarbonsäureester (a 1), wie 4-Hydroxy-cyclohexancarbonsäure und deren Ester, und aromatische Hydroxycarbonsäuren und Hydroxycarbonsäureester (a 2), wie Salicylsäure und deren Ester, eingesetzt werden.

Bevorzugt werden indes aliphatische Dicarbonsäuren (a 1) und/oder ihre Derivate und aromatische Dicarbonsäuren (a 2) und/oder ihre Derivate einerseits und aliphatische Diole (a 1) andererseits verwendet.

Dabei liegt das Gewichtsverhältnis von Struktureinheiten (a 1), die sich von aliphatischen Dicarbonsäuren und/oder ihren Derivaten ableiten, zu Struktureinheiten (a 2), die sich von aromatischen Dicarbonsäuren (a 2) und/oder ihren Derivaten ableiten, vorzugsweise bei 1,5 : 1 bis 5 : 1, bevorzugt bei 2 : 1 bis 4 : 1 und insbesondere 2,5: 1 bis 3,7 : 1.

Die Herstellung der hydroxylgruppenterminierten Polyester (A) bietet keine methodischen Besonderheiten, sondern erfolgt mit Hilfe üblicher und bekannter Vorrichtungen und Verfahren, wobei gegebenenfalls das bei der Polykondensation entstehende Wasser mit Hilfe von Schleppmitteln, wie Cyclohexan oder Methylcylohexan, azeotrop aus dem Reaktionsgemisch entfernt werden.

Das partiell blockierte Polyisocyanat (B) weist im statistischen Mittel mehr als 1,5 weniger als 3, vorzugsweise mehr als 1,8 und weniger als 2,8 und insbesondere mehr als 1,9 und weniger als 2,5 freie isocyanatgruppen im Molekül auf.

Vorzugsweise wird das partiell blockierte Polyisocyanat (B) aus der Gruppe, bestehend aus partiell blockierten, Isocyanurat-, Biuret-, Allophanat-, Iminooxadiazindion-, Urethan-, Carbodiimid-, Hamstoff- und Uretdiongruppen enthaltenden Polyisocyanaten, ausgewählt.

Vorzugsweise wird das partiell blockierte Polyisocyanat (B) aus Diisocyanaten hergestellt. Die Diisocyanate werden vorzugsweise aus der Gruppe, bestehend aus Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1 -yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentame-thylendiisocyanat, Hexamethylendiisocyanat, Ethylethylendiisocyanat, Trimethylhexandiisocyanat, Heptanmethylendiisocyanat, 2-Heptyl-3,4-bis(9-isocyanatononyl)-1-pentyl-cyclohexan, 1,2-, 1,4- und 1,3-Bis(isocyanatomethyl)cyclohexan, 1,2-, 1,4- und 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, Toluylendiisocyanat, Xylylendiisocyanat, Bisphenylendiisocyanat, Naphthylendiisocyanat oder Diphenylmethandiisocyanat, insbesondere aus der Gruppe, bestehend aus Hexamethylendiisocyanat, Isophorondiisocyanat und Bis(4-isocyanatocyclohexyl)methan eines trans/trans-Gehalts von bis zu 30 Gew.-%, ausgewählt.

Für die partielle Blockierung können alle üblichen und bekannten Blockierungsmittel angewandt werden. Vorzugsweise werden die Blockierungsmittel aus der Gruppe, bestehend aus
(i) Phenolen, wie Phenol, Cresol, Xylenol, Nitrophenol, Chlorophenol, Ethylphenol, tert.-Butylphenol, Hydroxybenzoesäure, Ester dieser Säure oder 2,5- di-tert.-Butyl-4-hydroxytoluol;
(ii) Lactamen, wie ε-Caprolactam, δ-Valerolactam, γ-Butyrolactam oder β-Propiolactam;
(iii) aktiven methylenischen Verbindungen, wie Diethylmalonat, Dimethylmalonat, Acetessigsäureethyl- oder -methylester oder Acetylaceton;
(iv) Alkoholen, wie Methanol, Ethanol, n-Propanol, Isopropanol, n-Butanol, Isobutanol, t-Butanol, n-Amylalkohol, t-Amylalkohol, n-Hexanol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
(v) Mercaptanen, wie Butylmercaptan, Hexylmercaptan, t-Butylmercaptan, t-Dodecylmercaptan, 2-Mercaptobenzothiazol, Thiophenol, Methylthiophenol oder Ethylthiophenol;
(vi) Säureamiden, wie Acetoanilid, Acetoanisidinamid, Acrylamid, Methacrylamid, Essigsäureamid, Stearinsäureamid oder Benzamid;
(vii) Imiden, wie Succinimid, Phthalimid oder Maleimid;
(viii) Aminen, wie Diphenylamin, Phenylnaphthylamin, Xylidin, N-Phenylxylidin, Carbazol, Anilin, Naphthylamin, Butylamin, Dibutylamin oder Butylphenylamin;
(ix) Imidazolen, wie Imidazol oder 2-Ethylimidazol;
(x) Harnstoffen, wie Harnstoff, Thioharnstoff, Ethylenharnstoff, Ethylenthiohamstoff oder 1,3-Diphenylharnstoff;
(xi) Carbamaten, wie N-Phenylcarbamidsäurephenylester oder 2-Oxazolidon;
(xii) Iminen, wie Ethylenimin;
(xiii) Oximen, wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
(xiv) Salzen der schwefeligen Säure, wie Natriumbisulfit oder Kaliumbisulfit;
(xv) Hydroxamsäureestern, wie Benzylmethacrylohydroxamat (BMH) oder Allylmethacrylohydroxamat; oder
(xvi) substituierten Pyrazolen und Triazolen; sowie
(xvii) Gemischen dieser Blockierungsmittel;
ausgewählt. Insbesondere werden die Blockierungsmittel aus der Gruppe, bestehend aus, Methanol, Ethanol, n-Propanol, Isopropanol, n-Butanol, Isobutanol, t-Butanol, n-Amylalkohol, t-Amylalkohol, n-Hexanol und Methylethylketoxim, ausgewählt.

Bei der Umsetzung von (A) mit (B) ist das Äquivalentverhältnis von freien Isocyanatgruppen in (B) zu Hydroxylgrupppen in (A) > 1, insbesondere > 1,2. Im allgemeinen brauchten ein Äquivalentverhältnis von 2,5, insbesondere 2,4, nicht überschritten zu werden.

Das bei der Umsetzung resultierende isocyanatgruppenterminierte Polyurethan-Präpolymer wird mit mindestens einer, insbesondere einer, Verbindung (C), die mindestens zwei, vorzugsweise mindestens drei und insbesondere drei isocyanatreaktive funktionelle Gruppen im Molekül enthält, kettenverlängert. Beispiele geeigneter isocyanatreaktiver funktioneller Gruppen sind die vorstehend beschriebenen, wobei Hydroxylgruppen und sekundäre Aminogruppen besonders bevorzugt verwendet werden.

Beispiele geeigneter Verbindungen (C) sind aus der deutschen Patentanmeldung DE 199 14 896 A 1, Spalte 10, Zeile 10 bis 52, bekannt. Besonders bevorzugt wird Diethanolamin verwendet.

Das resultierende erfindungsgemäße Polyurethan kann in vielfältiger Weise verwendet werden. Vorzugsweise wird es als Bindemittel für nicht wässrige, lösemittelhaltige Beschichtungsstoffe, Klebstoffe und Dichtungsmassen eingesetzt.

Die erfindungsgemäßen Beschichtungsstoffe, Klebstoffe und Dichtungsmassen sind hervorragend für das Lackieren, Verkleben und Abdichten von Kraftfahrzeugkarosserien und Teilen hiervon, Kraftfahrzeugen im Innen- und Außenbereich, Bauwerken im Innen- und Außenbereich, Türen, Fenstern, Möbeln und Glashohlkörpern sowie im Rahmen der industriellen Lackierung für das Lackieren, Verkleben und Abdichten von Kleinteilen, Coils, Container, Emballagen, elektrotechnischen Bauteilen und weißer Ware geeignet.

Bevorzugt wird das erfindungsgemäße Polyurethan als Bindemittel in nicht wässrigen, farb- und/oder effektgebenden Beschichtungsstoffen eingesetzt, die im folgenden als »erfindungsgemäße Beschichtungsstoffe« bezeichnet werden.

Vorzugsweise enthalten die erfindungsgemäßen Beschichtungsstoffe
(I) mindestens eines der vorstehend beschriebenen erfindungsgemäßen Polyurethane,
(II) mindestens ein farb- und/oder effektgebendes Pigment und
(III) mindestens einen Celluloseester.

Der Gehalt des erfindungsgemäßen Beschichtungsstoffs an dem erfindungsgemäßen Polyurethan (I) kann breit variieren und richtet sich nach den Erfordernissen des Einzelfalls. Vorzugsweise liegt der Gehalt bei 2 bis 70, bevorzugt 3 bis 60, besonders bevorzugt 10 bis 55 und insbesondere 12,5 bis 50 Gew.%, jeweils bezogen auf den Bindemittelfestkörper des erfindungsgemäßen Beschichtungsstoffs.

Vorzugsweise werden die farb- und/oder effektgebenden Pigmente (II) aus der Gruppe, bestehend aus organischen und anorganischen, farbigen, optisch effektgebenden, elektrisch leitfähigen, magnetisch abschirmenden oder fluoreszierenden Pigmenten, Metallpulvern, korrosionsschützenden Pigmenten, organischen und anorganischen, transparenten oder deckenden Füllstoffen oder Nanopartikeln, insbesondere aber optisch effektgebenden und farbgebenden Pigmenten, ausgewählt.

Beispiele geeigneter Effektpigmente (II) sind Metallplättchenpigmente, wie handelsübliche Aluminiumbronzen, gemäß DE 36 36 183 A 1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381, »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A 1, EP 0 264 843 A1, EP 0 265 820 A 1, EP 0 283 852 A 1, EP 0 293 746 A 1, EP 0 417 567 A 1, US 4,828,826 A, US 5,244,649 A, EP 0 736 073 B 1 oder EP 0 736 076 B 1 verwiesen.

Beispiele für geeignete anorganische farbgebende Pigmente (II) sind Weißpigmente, wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente (II) sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »MetallkomplexPigmente«, verwiesen.

Beispiele für fluoreszierende Pigmente (II) (Tagesleuchtpigmente) sind Bis(azomethin)-Pigmente.

Beispiele für geeignete elektrisch leitfähige Pigmente (II) sind Titandioxid/Zinnoxid-Pigmente.

Beispiele für magnetisch abschirmende Pigmente (II) sind Pigmente auf der Basis von Eisenoxiden oder Chromdioxid.

Beispiele für geeignete Metallpulver (II) sind Pulver aus Metallen und Metallegierungen Aluminium, Zink, Kupfer, Bronze oder Messing.

Ein Beispiel für ein korrosionsschützendes Pigment (II) ist Zinkphosphat.

Beispiele geeigneter organischer und anorganischer Füllstoffe (II) sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Polyamid oder Polyacrlynitril. Ergänzend wird auf Römpp Lexikon Lacke und Druckfarben, Georg Thieme Verlag, 1998, Seiten 250 ff., »Füllstoffe«, verwiesen.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden können.

Beispiele geeigneter transparenter Füllstoffe (II) sind solche auf der Basis von Siliziumdioxid, Aluminiumoxid oder Zirkoniumoxid.

Geeignete Nanopartikel (II) werden ausgewählt aus der Gruppe, bestehend aus hydrophilen und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben. Ganz besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet. Weitere geeignete Nanopartikel sind aus der deutschen Patentanmeldung DE 195 40 623 A 1, Spalte 4, Zeile 31, bis Spalte 5, Zeile 30, bekannt.

Die Pigmentkonzentration der erfindungsgemäßen Beschichtungsstoffe kann sehr breit variieren und richtet sich in erster Linie nach dem Effekt, der eingestellt werden soll, und/oder dem Deckvermögen der farbgebenden Pigmente. Vorzugsweise liegt die Pigmentkonzentration bei insgesamt 3 bis 90, bevorzugt 3 bis 35 Gew.-%, bezogen auf den Festkörper des erfindungsgemäßen Beschichtungsstoffs.

Die Pigmente können in beliebiger Weise dem erfindungsgemäßen Beschichtungsstoff zugesetzt werden, z.B. als Paste. Solche Pasten enthalten bevorzugt ein Anreibebindemittel, vorzugsweise auf Aminoplastharzbasis, mindestens ein organisches Lösemittel sowie das Pigment oder eine Mischung aus Pigmenten (vgl. auch Römpp Lexikon Lacke und Druckfarben, Georg Thieme Verlag, Stuttgart, New York, 1998, »Pigmentpräparationen«, Seite 452).

Vorzugsweise werden als Celluloseester (III) Celluloseacetobutyrate (CAB) verwendet, wie sie beispielsweise in Römpp Lexikon Lacke und Druckfarben, Georg Thieme Verlag, Stuttgart, New York, 1998, »Celluloseacetobutyrate«, Seite 104, oder in der britischen Patentanmeldung GB 2 156 829 A Seite 5, Zeilen 1 bis 56, beschrieben werden. Auch der Gehalt der Celluloseester (II) kann breit variieren und richtet sich nach den Erfordernissen des Einzelfalls. Vorzugsweise liegt der Gehalt bei 0,5 bis 20, bevorzugt 1 bis 18, besonders bevorzugt 2 bis 15 und insbesondere 2 bis 10 Gew.%, jeweils bezogen auf den Festkörper des erfindungsgemäßen Beschichtungsstoffs.

Die erfindungsgemäßen Beschichtungsstoffe können des weiteren Vernetzungsmittel enthalten. Als Vernetzungsmittel sind insbesondere die auf dem Lackgebiet bekannten Vemetzer wie Melaminharze, blockierte Polyisocyanate und/oder Tris(alkoxycarbonylamino)triazine einsetzbar, die mit freien OH-Gruppen reagieren können. Beispiele dieser geeigneten und weiterer geeigneter Vernetzungsmittel werden in der deutschen Patentanmeldung DE 199 24 170 A 1, Spalte 10, Zeile 51, bis Spalte 12, Zeile 69, beschrieben.

Die erfindungsgemäßen Beschichtungsstoffen können des weiteren übliche und bekannte lacktypische Zusatzstoffe, wie modifizierte Polyethylenwachse, epoxidierte Fettsäureester, Rheologiehilfsmittel, wie die aus den deutschen Patentanmeldungen DE 199 24 170 A 1, DE 199 24 171 A 1 und DE 199 24 172 A 1 oder den internationalen Patentanmeldungen WO 00/37520 und WO 00/37520 bekannten Rheologiehilfsmittel auf Harnstoffbasis. Weitere Beispiele geeigneter Zusatzstoffe sind aus der deutschen Patentanmeldung DE 199 24 170 A 1, Spalte 13, Zeile 6, bis Spalte 14, Zeile 2, bekannt.

Die erfindungsgemäßen Beschichtungsstoffe weisen im allgemeinen einen Festkörpergehalt von vorzugsweise 5 bis 60, bevorzugt 7 bis 55, besonders bevorzugt 10 bis 50 und insbesondere 10 bis 45 Gew.-% auf.

Die Herstellung des erfindungsgemäßen Beschichtungsstoffs weist keine methodischen Besonderheiten auf, sondern erfolgt durch das Vermischen der vorstehend beschriebenen Bestandteile. Dabei können Mischaggregate, wie Rührkessel, Dissolver, In-line-Dissolver, Rührwerksmühlen, statische Mischer, Zahnkranz-Dispergatoren oder Extruder, verwendet werden. Gegebenenfalls wird unter Ausschluß von aktinischer Strahlung gearbeitet, um eine Schädigung des erfindungsgemäßen Beschichtungsstoffs, der zusätzlich mit aktinischer Strahlung härtbar ist, zu vermeiden.

Vorzugsweise werden die erfindungsgemäßen Beschichtungsstoffe auf eine mit einem üblichen Füller beschichtete Substratoberfläche aufgebracht Als Füller kann jeder physikalisch oder thermisch härtbare, aus dem Stand der Technik bekannte Füller eingesetzt werden (vgl. US 4,537,926 A 1, EP 0 529 335 A 1, EP 0 595 186 A 1, EP 0 639 660 A 1, DE 44 38 504 A 1, DE 43 37 961 A 1, WO 89,/10387, US 4,450,200 A 1, US 4,614,683 A 1 oder WO 94/26827). Im allgemeinen wird die Füllerschicht vor der Applikation des erfindungsgemäßen Beschichtungsstoffs thermisch gehärtet oder man lässt die Füllerschicht vor dem Auftrag der erfindungsgemäßen Beschichtungsstoffe kurz abdunsten.

Als Substrate kommen alle zu lackierenden Oberflächen, die durch eine Härtung der hierauf befindlichen Lackierungen unter Anwendung von Hitze oder Hitze und aktinischer Strahlung nicht geschädigt werden, in Betracht. Geeignete Subtrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Die Oberflächen dieser Materialien können bereits vorlackiert oder vorbeschichtet sein.

Nach der Applikation des Füllers wird der erfindungsgemäße Beschichtungsstoff in an sich bekannter Weise, beispielsweise durch Spritzen, Streichen, Tauchen, Fluten, Rakeln oder Walzen auf das Substrat aufgebracht.

Die resultierende erfindungsgemäße Basislackschicht wird im allgemeinen mit einer geeigneten transparenten Decklackbeschichtung bzw. einem Klarlack überlackiert. Vor dem Auftragen des Klarlacks lässt man die Basislackschicht vorteilhafterweise kurz abdunsten, vorzugsweise 1 bis 15 Minuten, insbesondere 4 bis 8 Minuten, bei einer Temperatur von Raumtemperatur bis 100, insbesondere 45 bis 100 °C. Der Zeitraum des Abdunstens hängt von der Temperatur ab und ist über weite Bereiche einstellbar.

Als Klarlacke zur Herstellung der Klarlackierungen kommen alle üblichen und bekannten Einkomponenten(1K)-, Zweikomponenten(2K)- oder Mehrkomponenten(3K, 4K)-Klarlacke, Pulverklarlacke, Pulverslurry-Klarlacke oder UV-härtbaren Klarlacke in Betracht.

Thermisch härtbare Einkomponenten(1K)-, Zweikomponenten(2K)- oder Mehrkomponenten(3K, 4K)-Klarlacke sind aus den europäischen Patentanmeldungen DE 42 04 518 A 1, 0 594 068 A 1, 0 594 071 A 1, 0 594 142 A 1, 0 604 992 A 1 oder 0 596 460 A 1 den internationalen Patentanmeldungen WO 94/10211, WO 94/10212, WO 94/10213, WO 94/22969 oder WO 92/22615 oder den amerikanischen Patentschriften US 5,474,811 A, 5,356,669 A oder 5,605,965 A bekannt.

Einkomponenten (1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. die amerikanischen Patentschriften US 5,474,811 A, 5,356,669 A oder 5,605,965 A 1, die internationalen Patentanmeldungen WO 94/10211, WO 94/10212 oder WO 94/10213 oder die europäischen Patentanmeldungen EP 0 594 068 A 1, 0 594 071 A 1 oder 0 594 142 A 1).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Thermisch härtbare Pulverklarlacke sind beispielsweise aus der deutschen Patentanmeldung DE 42 22 194 A 1, der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulversluny-Klarlacke sind aus der US-Patentschrift US 4,268,542 A 1 und den Patentanmeldungen DE 195 40 977 A 1, DE 195 18 392 A 1, DE 196 17 086 A 1, DE 196 13 547 A 1, EP 0 652 264 A 1, DE 196 18 657 A 1, DE 196 52 813 A 1, DE 196 17 086 A 1 oder DE-A-198 14 471 A 1 bekannt.

Pulverslurry-Klarlacke enthalten bekanntermaßen Pulverklarlacke in einem wässrigen Medium dispergiert.

Mit aktinischer Strahlung härtbare Klarlacke, Pulverklarlacke und Pulverslurry-Klarlacke gehen beispielsweise aus den europäischen Patentanmeldungen EP 0 EP 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 198 35 206 A 1, DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A hervor.

Thermisch und mit aktinischer Strahlung härtbare Klarlacke, Pulverklarlacke und Pulverslurry-Klarlacke gehen beispielsweise aus den Patentanmeldungen DE 198 18 735 A 1, WO 98/40170, DE 199 08 013 A 1, DE 199 08 018 A 1, EP 0 844 286 A 1 oder EP 0 928 800 A 1 hervor.

Im allgmeinen werden die Klarlacke in einer Nassschichtdicke appliziert, dass nach ihrer Aushärtung Klarlackierungen mit der für ihre Funktionen notwendigen und vorteilhaften Schichtdicken resultieren. Vorzugsweise liegen sie bei 10 bis 100, vorzugsweise 15 bis 80, besonders bevorzugt 20 bis 75 und insbesondere 25 bis 70 µm.

Nach der Applikation werden die farb- und/oder effektgebenden Basislackschichten gemeinsam mit den Klarlackschichten sowie gegebenenfalls mit den Füllerschichten thermisch gehärtet.

Die Aushärtung kann nach einer gewissen Ruhezeit oder Ablüftzeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Schichten und zum Verdunsten von flüchtigen Bestandteilen wie gegebenenfalls noch vorhandenem Lösemittel.

Die thermische Härtung weist keine methodischen Besonderheiten auf, sondern erfolgt nach den üblichen und bekannten Methoden, wie Erhitzen in einem Umluftofen im Gegenstrom oder Bestrahlen mit IR- und/oder NIR-Lampen. Vorteilhafterweise erfolgt die thermische Härtung bei Temperaturen von 90 bis 180 °C.

Die erfindungsgemäßen Beschichtungsstoffe oder Basislacke sind hervorragend zur Herstellung von dekorativen, funktions- und effektgebenden und/oder schützenden, einschichtigen und mehrschichtigen Beschichtungen von Kraftfahrzeugkarosserien und Teilen hiervon, Kraftfahrzeugen im Innen- und Außenbereich, Bauwerken im Innen- und Außenbereich, Türen, Fenstern, Möbeln und Glashohlkörpern sowie im Rahmen der industriellen Lackierung von Kleinteilen, Coils, Container, Emballagen, elektrotechnischen Bauteilen und weißer Ware geeignet.

Bei der großflächigen oder vollflächigen Reparatur von farb- und/oder effektgebenden Ein- und Mehrschichtlackierungen, insbesondere von Originallackierungen von Kraftfahrzeugkarosserien in der Linie, ist es möglich, die erfindungsgemäßen Beschichtungsstoffe ohne spezielle Vorbehandlung und/oder Hilfsmittel direkt auf die auszubessernden Oberflächen aufzutragen.

Die erfindungsgemäßen effektgebenden Ein- und Mehrschichtlackierungen sind, was Farbe, Effekt, Glanz und D.O.I. (distinctiveness of the reflected image) betrifft, von höchster optischer Qualität, haben eine glatte, strukturfreie, harte, flexible und kratzfeste Oberfläche, sind witterungs-, chemikalien- und etch-beständig, sie vergilben nicht, zeigen keine Rissbildung und Delamination der Schichten oder eine Schädigung der Pigmente (II). Dies gilt sowohl für die Originallackierungen als auch für die Reparaturlackierungen.

Daher weisen auch die erfindungsgemäßen Substrate, insbesondere Karosserien von Automobilen und Nutzfahrzeugen, Bauwerke im Innen- und Außenbereich, industrielle Bauteile, inklusive Kunststoffteile, Kleinteile, Emballagen, Coils, weiße Ware und elektrische Bauteile, oder Möbel, Türe, Fenster oder Glashohlkörper, die mit mindestens einer erfindungsgemäßen Beschichtung beschichtet sind, besondere technische und wirtschaftliche Vorteile, insbesondere eine lange Gebrauchsdauer, auf, was sie für die Anwender besonders attraktiv macht.

### Beispiele und Vergleichsversuche

### Herstellbeispiel 1

### Die Herstellung einer Perleffektpigmentpaste A

Die Perleffektpigmentpaste A wurde aus 20 Gewichtsteilen Merlin ® Extra Fine Russet 459 V, 13,5 Gewichtsteilen einer 6prozentigen Dispersion eines modifizierten Polyethylenwachses in Butylacetat/Solventnaphtha ®, 18 Gewichtsteilen Celluloseacetobutyratlösung (CAB) (15prozentige Lösung eines Celluloseacetobutyrats der Firma Eastman mit einem Acetylgehalt von 13 bis 16 Gew.% und einem Butyratgehalt von 33 bis 38,9 Gew.%, gelöst in einem Gemisch aus Butylacetat und Isotridecylalkohol im Gewichtsverhältnis von 23 : 1) und 4,5 Gewichtsteilen Butylacetat hergestellt.

### Herstellbeispiel 2

### Die Herstellung einer Pigmentpaste A

34 Gewichtsteile Irgazin ® DPP-Rot BO wurden in 50 Gewichtsteilen eines Bindemittelgemischs aus CAB-Lösung (vgl. Herstellbeispiel 1) und eines mit Butanol partiell veretherten, mittelreaktiven Melaminharzes (55prozentig in Butanol) im Gewichtsverhältnis von 1 : 1, 11 Gewichtsteilen Butylacetat und 5 Gewichtsteilen Butylglykolacetat angerieben.

### Herstellbeispiel 3

### Die Herstellung einer Pigmentpaste B

27 Gewichtsteile Novoperm ®-Rot F2RK70 wurden in 50 Gewichtsteilen eines Bindemittelgemischs aus CAB-Lösung und Melaminharz (vgl. Herstellbeispiel 2), 18 Gewichtsteilen Butylacetat und 5 Gewichtsteilen Butylglykolacetat angerieben.

### Herstellbeispiel 4

### Die Herstellung einer Pigmentpaste C

11 Gewichtsteile Irgazin ®-Rot A2 BN wurden in 50 Gewichtsteilen eines Bindemittelgemischs aus CAB-Lösung und Melaminharz (vgl. Herstellbeispiel 2), 34 Gewichtsteilen Butylacetat und 5 Gewichtsteilen Butylglykolacetat angerieben.

### Herstellbeispiel 5

### Die Herstellung einer Pigmentpaste D

13 Gewichtsteile Paliogen ®-Rot 3885 wurden in 50 Gewichtsteilen eines Bindemittelgemischs aus CAB-Lösung und Melaminharz (vgl. Herstellbeispiel 2), 32 Gewichtsteilen Butylacetat und 5, Gewichtsteilen Butylglykolacetat angerieben.

### Herstellbeispiel 6

### Die Herstellung einer Pigmentpaste E

9,5 Gewichtsteile Hostaperm ®-Rosa E 3885 wurden in50 Gewichtsteilen eines Bindemittelgemischs aus CAB-Lösung und Melaminharz (vgl. Herstellbeispiel 2), 35,5 Gewichtsteilen Butylacetat und 5 Gewichtsteilen Butylglykolacetat angerieben.

### Herstellbeispiel 7

### Die Herstellung einer Pigmentpaste F

6 Gewichtsteile Farbruß FW2 wurden in 50 Gewichtsteilen eines Bindemittelgemischs aus CAB-Lösung und Melaminharz (vgl. Herstellbeispiel 2), 39 Gewichtsteilen Butylacetat und 5 Gewichtsteilen Butylglykolacetat angerieben.

### Beispiel 1

### Die Herstellung eines erfindungsgemäßen Polyurethans

In einem Rührgefäß, ausgerüstet mit Rührer, Tropftrichter, Innenthermometer, Rückflußkühler und elektrischer Heizung, wurden 44,24 Gewichtsteile Methylethylketon, 196,65 Gewichtsteile des Isocyanurats von Hexamethylendiisocyanat (Desmodur ® N 3300 der Firma Bayer AG) vorgelegt und auf 60 °C aufgeheizt. Anschließend wurden 32,35 Gewichtsteile Butanol so zugetropft, dass die Temperatur des Reaktionsgemisches 80 °C nicht überschritt. Nach der vollständigen Umsetzung des Butanols wurden 342,24 Gewichtsteile eines Polyesters (A) (aufgebaut aus 36,36 Mol% Adipinsäure, 9,09 Mol% Isophthalsäure und 54,55 Mol% Hexandiol; Säurezahl: 4 mg KOH/g; Festkörpergehalt: 50 Gew.%; Lösemittelgehalt: 20 Gewichtsprozent Butylacetat und 30 Gew.% Methylethylketon) zugegeben. Die Temperatur des Reaktionsgemisches wurde solange bei 80 °C gehalten, bis der Isocyanatgehalt konstant war.

Danach wurde das Reaktionsgemisches auf 60 °Celsius abgekühlt. Bei dieser Temperatur wurden die Isocyanatgruppen des Polyurethan-Präpolymeren mit einer äquimolaren Menge Diethanolamin umgesetzt. Anschließend wurde das Methylethylketon abdestilliert. Das erfindungsgemäße Polyurethan wurde auf einen Festkörpergehalt von 55 Gew.% (1 Stunde/130 °C) eingestellt (Lösemittelgehalt: 20 Gew.% Solventnaphtha ®, 20 Gew.% Butanol, 4 Gew.% Butylacetat und < 1 Gew.% Methy(ethylketon).

Das erfindungsgemäße Polyurethan war hervorragend für die Herstellung von Beschichtungsstoffen, Klebstoffen und Dichtungsmassen geeignet.

### Beispiel 2

### Die Herstellung eines erfindungsgemäßen Beschichtungsstoffs (Basislack)

150 Gewichtsteile einer 6prozentigen Dispersion eines modifizierten Polyethylenwachses in Butylacetat/Solventnaphtha ® wurden in einem geeigneten Rührgefäß vorgelegt. Zur Vorlage wurden in der angegebenen Reihenfolge 85 Gewichtsteile einer CAB-Lösung (vgl. Herstellbeispiel 1), 65 Gewichtsteile des Polyurethans (A) des Beispiels 1, 60 Gewichtsteile eines Rheologiehilfsmittels auf Harnstoff- und Polyesterbasis (Setal ® 90173 der Firma Akzo), 56 Gewichtsteile eines Melaminharzes (vgl. Herstellbeispiel 2), 15 Gewichtsteile Hexamethoxymethylmelamin, 10 Gewichtsteile eines epoxidierten Fettsäureesters, 10 Gewichtsteile Butyldiglykolacetat, 60 Gewichtsteile Butylglykolacetat, 170 Gewichtsteile der Pigmentpaste D des Herstellbeispiels 5, 21 Gewichtsteile der Pigmentpaste E des Herstellbeispiels 6, 13 Gewichtsteile der Pigmentpaste F des Herstellbeispiel 7 und 56 Gewichtsteile der Perleffektpigmentpaste A des Herstellbeispiels 1 hinzugegeben, wonach die resultierende Mischung homogenisiert wurde. Der erfindungsgemäße Basislack war lagerstabil. Für die Applikation wurde er mit Butylacetat auf eine Spritzviskosität von 26 s im DIN 4-Auslaufbecher eingestellt.

### Vergleichsversuch V 1

### Die Herstellung eines nicht erfindungsgemäßen Basislacks

Beispiel 1 wurde wiederholt, wobei anstelle des erfindungsgemäßen Polyurethans ein handelsübliches, für die Herstellung von OEM-Basislacken geeignetes Polyesterharz (Festkörpergehalt: 60 Gew.%; Lösemittelgehalt: 40 Gew.% Butylacetat/Solventnaphtha 1 : 1) verwendet wurde.

### Beispiel 3 und Vergleichsversuch V 2

### Die Herstellung einer erfindungsgemäßen (Beispiel 3) und einer nicht erfindungsgemäßen (Vergleichsversuch V 2) farb- und effektgebenden Mehrschichtlackierung

Für das Beispiel 3 wurde der erfindungsgemäße Basislack des Beispiels 2 verwendet.

Für den Vergleichsversuch V 2 wurde der nicht erfindungsgemäße Basislack des Vergleichsversuchs V 1 verwendet.

Für die Prüfung der anwendungstechnischen Eigenschaften der Basislacke wurden in üblicher und bekannter Weise Prüftafeln der Abmessungen 10 mal 30 cm hergestellt. Hierzu wurden Karosseriebleche, die mit einer üblichen und bekannten, kathodisch abgeschiedenen und eingebrannten Elektrotauchlackierung beschichtet worden waren, mit einem handelsüblichen Füller der Firma BASF Coatings AG beschichtet. Die resultierenden Füllerschichten wurden während 5 Minuten bei 20 °C und einer relativen Luftfeuchtigkeit von 65% abgelüftet und in einem Umluftofen während 30 Minuten bei 140 °C eingebrannt. Nach dem Ablüften und Abkühlen der Prüftafeln auf 20 °C wurden die Basislacke durch pneumatische Spritzautomatenapplikation unter den für Automobilbasislacke üblichen Applikationsbedingungen auf die Prüftafeln mit einer Schichtdicke von 12 bis 15 µm aufgetragen. Nach einer Ablüftzeit von 5 Minuten wurden die Basislackschichten nass-in-nass mit einem handelsüblichen Einkomponentenklarlack der Firma BASF Coatings AG überschichtet. Anschließend wurden die Klarlackschichten und die Basislackschichten gemeinsam während 20 Minuten bei 140 °C eingebrannt. Es resultierten die erfindungsgemäße Mehrschichtlackierung des Beispiels 1 und die nicht erfindungsgemäße Mehrschichtlackierung des Vergleichsversuchs V 1. Die Klarlackierungen wiesen jeweils eine Schichtdicke von 40 µm auf.

Zur Simulation der Reparaturlackierungen wurde die erfindungsgemäße Mehrschichtlackierung des Beispiels 1 in der vorstehend beschriebenen Weise erneut mit der erfindungsgemäßen Basislackierung und der Klarlackierung beschichtet, und die nicht erfindungsgemäße Mehrschichtlackierung wurde in der vorstehend beschriebenen Weise erneut mit der nicht erfindungsgemäßen Basislackierung und der Klarlackierung beschichtet.

Die Steinschlagbeständigkeit der Reparaturlackierungen wurde mit Hilfe des Multischlagtests nach VDA (Druck: 2 bar und zweimal 500 g Stahlsplitt) getestet. Hierbei erwies sich die erfindungsgemäße Reparaturlackierung des Beispiels 3 (KW 1-2) als steinschlagbeständiger als die nicht erfindungsgemäße Reparaturlackierung des Vergleichsversuchs V 2 (KW 2-3).

Außerdem wurde die Einzelschlagbeständigkeit nach der BMW-Monoschlagprüfung getestet. Auch hier war die erfindungsgemäße Reparaturlackierung (Abplatzbreite: 3,5 mm) der nicht erfindungsgemäßen (Abplatzbreite: 6 mm) deutlich überlegen.

### Beispiel 4

### Die Herstellung eines erfindungsgemäßen farbgebenden Basislacks

In einem geeigneten Rührgefäß wurden 90 Gewichtsteile eines 6prozentigen Dispersion eines modifizierten Polyethylenwachses in Butylacetat/Solventnaphtha ® vorgelegt. Zur Vorlage wurden unter Rühren 30 Gewichtsteile einer CAB-Lösung (vgl. Herstellbeispiel 1), 156 Gewichtsteile des erfindungsgemäßen Polyurethans des Beispiels 1, 5 Gewichtsteile eines Melaminharzes (vgl. Herstellbeispiel 2), 18 Gewichtsteile eines epoxidierten Fettsäureesters, 17 Gewichtsteile Butylglykolacetat, 120 Gewichtsteile der Pigmentpaste A des Herstellbeispiels 2, 56 Gewichtsteile der Pigmentpaste B des Herstellbeispiels 3, 220 Gewichtsteile der Pigmentpaste C des Herstellbeispiels 4, 2 Gewichtsteile einer einprozentigen Lösung eines phenylgruppenhaltigen Polydimethylsiloxans in Xylol (95%)/Butanol (4%), 1 Gewichtsteil einer Lösung eines modifizierten Harnstoffs (Byk ® 410 der Firma Byk Chemie) und 282 Gewichtsteile Butylacetat.

Der erfindungsgemäße Basislack war lagerstabil. Für die Applikation wurde er mit Butylacetat auf eine Spritzviskosität von 26s im DIN 4-Auslaufbecher eingestellt.

### Vergleichsversuch V 3

### Die Herstellung eines nicht erfindungsgemäßen farbgebenden Basislacks

Beispiel 4 wurde wiederholt, wobei anstelle der 156 Gewichtsteile des erfindungsgemäßen Polyurethans 160 Gewichtsteile Setal ® 90173 verwendet wurden.

### Beispiel 5 und Vergleichsversuch V 4

### Die Herstellung einer erfindungsgemäßen (Beispiel 5) und einer nicht erfindungsgemäßen (Vergleichsversuch V 4) farbgebenden Mehrschichtlackierung

Für das Beispiel 5 wurde der erfindungsgemäße Basislack des Beispiels 4 verwendet.

Für den Vergleichsversuch V 4 wurde der nicht erfindungsgemäße Basislack des Vergleichsversuchs V 3 verwendet.

Für die Bestimmung der Steinschlagbeständigkeit der Reparaturlackierung nach Renault wurden die Prüftafeln, wie bei Beispiel 3 und Vergleichsversuch V 2 beschrieben, hergestellt.

Für die Bestimmung der Scheibenverklebung nach Renault wurden die Prüftafeln, wie bei Beispiel 3 und Vergleichsversuch V 2 beschrieben, hergestellt, wobei die Füllerschichten während 15 Minuten bei 150°C und die Basislackschichten und die Klarlackschichten während 15 Minuten bei 140 °C eingebrannt wurden. Außerdem wurden die Klarlackierungen in einer Schichtdicke von 25 µm anstelle von 40 µm hergestellt. Die resultierenden Prüftafeln wurden 2 Stunden nach ihrer Herstellung mit einem Sealer versehen. Die Prüftafeln wurden während 7 Tagen bei Raumtemperatur und einer relativen Luftfeuchtigkeit von 45 bis 55% konditioniert. Es wurde jeweils die Hälfte des Sealers von den Prüftafeln mit einem Schneider entfernt. Anschließend wurden die Prüftafeln während 7 Tagen bei 60 °C dem Cataplasmatest unterzogen. Danach wurde die zweite Hälfte des Sealers mit einem Schneider entfernt. Idealerweise sollte keine Enthaftung und zu beobachten sein.

Die erfindungsgemäße Reparaturlackierung des Beispiels 5 war bei der Steinschlagbeständigkeit nach Renault (COT 3) der nicht erfindungsgemäßen Reparaturlackierung des Vergleichsversuchs V 4 (COT 5) eindeutig überlegen. Bei dem Test der Scheibenverklebung war die erfindungsgemäße Mehrschichtlackierung des Beispiels 5 (0% Enthaftung nach Belastung) der nicht erfindungsgemäßen Mehrschichtlackierung des Vergleichsversuchs V 4 (100% Enthaftung nach Belastung) ebenfalls eindeutig überlegen.

Für die Bestimmung der Steinschlagbeständigkeit der Reparaturlackierungen nach PSA wurde die Prüftafeln, wie bei Beispiel 3 und Vergleichsversuch V 2 beschrieben hergestellt, nur dass die Füllerschichten während 20 Minuten bei 145 °C eingebrannt wurden.

Die Prüftafeln wurden dem VDA-Multisteinschlagtest unterzogen. Nach dem Test wurden sie während 24 Stunden in einem Bac Ford gelagert (Wassereintauchtest, bei dem die Prüftafeln in deionisiertem Wasser bei 30 °C während 24 Stunden gelagert wurden). Danach wurden sie erneut mit dem VDA-Multisteinschlagtest getestet. Auch in diesem Test war die erfindungsgemäße Reparaturlackierung des Beispiels 5 (COT A) der nicht erfindungsgemäßen des Vergleichsversuchs V 4 (COT C) eindeutig überlegen.

Des weiteren wurde die Steinschlagbeständigkeit der Erstlackierungen nach der Feuchtigkeitsbelastung nach Renault in der gleichen Weise getestet. Es wurden dieselben Ergebnisse wie bei den Reparaturlackierungen erhalten.

## Patentansprüche

1. Selbstvernetzendes, verzweigtes Polyurethan, herstellbar, indem man
(A) mindestens einen hydroxylgruppenterminierten Polyester eines zahlenmittleren Molekulargewichts von 500 bis 4.000 Dalton, enthaltend, bezogen auf den Polyester (A),
(a 1) 60 bis 95 Gew.% an Struktureinheiten, die sich von aliphatischen Ausgangsprodukten ableiten, und
(a 2) 5 bis 40 Gew.% an Struktureinheiten, die sich von aromatischen Ausgangsprodukten ableiten,
mit
(B) mindestens einem partiell blockierten Polyisocyanat, das im statistischen Mittel mehr als 1,5 und weniger als 3 freie Isocyanatgruppen im Molekül aufweist,
wobei das Äquivalentverhältnis von freien Isocyanatgruppen im Polyisocyanat (B) zu Hydroxylgruppen im Polyester (A) > 1, zu einem isocyanatgruppenterminierten Polyurethan-Präpolymer umsetzt, das mit
(C) mindestens einer Verbindung, die im statistischen Mittel mindestens zwei isocyanatreaktive funktionelle Gruppen im Molekül enthält, kettenverlängert und/oder blockiert wird.

2. Polyurethan nach Anspruch 1, **dadurch gekennzeichnet, dass** der hydroxylgruppenterminierte Polyester ein zahlenmittleres Molekulargewicht von 800 bis 3.000 Dalton aufweist.

3. Polyurethan nach Anspruch 1 oder 2, **dadurch gekennzeichnet, dass** der hydroxylgruppenterminierte Polyester (A), bezogen auf (A), 70 bis 92 Gew.% an Struktureinheiten (a 1) und 8 bis 30 Gew.% an Struktureinheiten (a 2) enthält.

4. Polyurethan nach einem der Ansprüche 1 bis 3, **dadurch gekennzeichnet, dass** das Gewichtsverhältnis von Struktureinheiten (a 1), die sich von aliphatischen Dicarbonsäuren und/oder Dicarbonsäurederivaten ableiten, zu Struktureinheiten (a 2), die sich von aromatischen Dicarbonsäuren und/oder Dicarbonsäurederivaten ableiten, bei 1,5 : 1 bis 5 : 1 liegt.

5. Polyurethan nach einem der Ansprüche 1 bis 4, **dadurch gekennzeichnet, dass** das partiell blockierte Polyisocyanat (B) im statistischen Mittel mehr als 1,9 und weniger als 2,5 freie Isocyanatgruppen im Molekül aufweist.

6. Polyurethan nach einem der Ansprüche 1 bis 5, **dadurch gekennzeichnet, dass** das partiell blockierte Polyisocyanat (B) aus der Gruppe, bestehend aus partiell blockierten, Isocyanurat-, Biuret-, Allophanat-, Iminooxadiazindion-, Urethan-, Carbodiimid-, Hamstoff- und Uretdiongruppen enthaltenden Polyisocyanaten, ausgewählt wird.

7. Polyurethan nach Anspruch 6, **dadurch gekennzeichnet, dass** das partiell blockierte Polyisocyanat (B) aus Diisocyanaten herstellbar ist.

8. Polyurethan nach Anspruch 7, **dadurch gekennzeichnet, dass** die Diisocyanate aus der Gruppe, bestehend aus Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-lsocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat, 2-Heptyl-3,4-bis(9-isocyanatononyl)-1-pentyl-cyclohexan, 1,2-, 1,4- und 1,3-Bis(isocyanatomethyl)cyclohexan, 1,2-, 1,4- und 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, Toluylendiisocyanat, Xylylendiisocyanat, Bisphenylendiisocyanat, Naphthylendiisocyanat oder Diphenylmethandiisocyanat, ausgewählt werden.

9. Polyurethan nach Anspruch 8, **dadurch gekennzeichnet, dass** die Diisocyanate aus der Gruppe, bestehend aus Hexamethylendiisocyanat, Isophorondiisocyanat und Bis(4-isocyanatocyclohexyl)methan eines trans/trans-Gehalts von bis zu 30 Gew.-%, ausgewählt werden.

10. Polyurethan nach einem der Ansprüche 1 bis 9, **dadurch gekennzeichnet, dass** die Blockierungsmittel aus der Gruppe, bestehend aus
(i) Phenolen, wie Phenol, Cresol, Xylenol, Nitrophenol, Chlorophenol, Ethylphenol, tert.-Butylphenol, Hydroxybenzoesäure, Ester dieser Säure oder 2,5- di-tert.-Butyl-4-hydroxytoluol;
(ii) Lactamen, wie ε-Caprolactam, δ-Valerolactam, γ-Butyrolactam oder β-Propiolactam;
(iii) aktiven methylenischen Verbindungen, wie Diethylmalonat, Dimethylmalonat, Acetessigsäureethyl- oder -methylester oder Acetylaceton;
(iv) Alkoholen, wie Methanol, Ethanol, n-Propanol, Isopropanol, n-Butanol, Isobutanol, t-Butanol, n-Amylalkohol, t-Amylalkohol, n-Hexanol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
(v) Mercaptanen, wie Butylmercaptan, Hexylmercaptan, t-Butylmercaptan, t-Dodecylmercaptan, 2-Mercaptobenzothiazol, Thiophenol, Methylthiophenol oder Ethylthiophenol;
(vi) Säureamiden, wie Acetoanilid, Acetoanisidinamid, Acrylamid, Methacrylamid, Essigsäureamid, Stearinsäureamid oder Benzamid;
(vii) Imiden, wie Succinimid, Phthalimid oder Maleimid;
(viii) Aminen, wie Diphenylamin, Phenylnaphthylamin, Xylidin, N-Phenylxylidin, Carbazol, Anilin, Naphthylamin, Butylamin, Dibutylamin oder Butylphenylamin;
(ix) Imidazolen, wie Imidazol oder 2-Ethylimidazol;
(x) Harnstoffen, wie Harnstoff, Thioharnstoff, Ethylenharnstoff, Ethylenthiohamstoff oder 1,3-Diphenylhamstoff;
(xi) Carbamaten, wie N-Phenylcarbamidsäurephenylester oder 2-Oxazolidon;
(xii) Iminen, wie Ethylenimin;
(xiii) Oximen, wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
(xiv) Salzen der schwefeligen Säure, wie Natriumbisulfit oder Kaliumbisulfit;
(xv) Hydroxamsäureestern, wie Benzylmethacrylohydroxamat (BMH) oder Allylmethacrylohydroxamat; oder
(xvi) substituierten Pyrazolen und Triazolen; sowie
(xvii) Gemischen dieser Blockierungsmittel;
ausgewählt werden.

11. Polyurethan nach Anspruch 10, **dadurch gekennzeichnet, dass** die Blockierungsmittel aus der Gruppe, bestehend aus, Methanol, Ethanol, n-Propanol, Isopropanol, n-Butanol, Isobutanol, t-Butanol, n-Amylalkohol, t-Amylalkohol, n-Hexanol und Methylethylketoxim, ausgewählt werden.

12. Polyurethan nach einem der Ansprüche 1 bis 11, **dadurch gekennzeichnet, dass** das Äquivalentverhältnis von freien Isocyanatgruppen in (B) zu Hydroxylgruppen in (A) > 1,2 ist.

13. Polyurethan nach einem der Ansprüche 1 bis 12, **dadurch gekennzeichnet, dass** die Verbindungen (C) drei isocyanatreaktive funktionelle Gruppen im Molekül enthalten.

14. Polyurethan nach Anspruch 13, **dadurch gekennzeichnet, dass** die isocyanatreaktiven funktionellen Gruppen aus der Gruppe, bestehend aus Hydroxylgruppen, Thiolgruppen und primären und sekundären Aminogruppen, ausgewählt werden.

15. Polyurethan nach Anspruch 14, **dadurch gekennzeichnet, dass** die isocyanatreaktiven funktionellen Gruppen aus Hydroxylgruppen und sekundären Aminogruppen, ausgewählt werden.

16. Polyurethan nach Anspruch 15, **dadurch gekennzeichnet, dass** die Verbindungen (C) Aminoalkohole sind.

17. Verfahren zur Herstellung von Polyurethanen gemäß einem der Ansprüche 1 bis 16, **dadurch gekennzeichnet, dass** man
(A) mindestens einen hydroxylgruppenterminierten Polyester eines zahlenmittleren Molekulargewichts von 500 bis 4.000 Dalton, enthaltend, bezogen auf den Polyester (A),
(a 1) 60 bis 95 Gew.% an Struktureinheiten, die sich von aliphatischen Ausgangsprodukten ableiten, und
(a 2) 5 bis 40 Gew.% an Struktureinheiten, die sich von aromatischen Ausgangsprodukten ableiten,
mit
(B) mindestens einem partiell blockierten Polyisocyanat, das im statistischen Mittel mehr als 1,5 und weniger als 3 freie Isocyanatgruppen im Molekül aufweist,
wobei das Äquivalentverhältnis von freien Isocyanatgruppen im Polyisocyanat (B) zu Hydroxylgruppen im Polyester (A) > 1, zu einem isocyanatgruppenterminierten Polyurethan-Präpolymer umsetzt, das mit
(C) mindestens einer Verbindung, die im statistischen Mittel mindestens zwei isocyanatreaktive funktionelle Gruppen im Molekül enthält, kettenverlängert und/oder blockiert wird.

18. Verwendung des Polyurethans gemäß einem der Ansprüche 1 bis 16 oder des nach dem Verfahren gemäß Anspruch 17 hergestellten Polyurethans als Bindemittel in Beschichtungsstoffen, Klebstoffen und Dichtungsmassen.

19. Verwendung nach Anspruch 18, **dadurch gekennzeichnet, dass** die Beschichtungsstoffe nicht wässrige, farb- und/oder effektgebende Beschichtungenstoffe sind.

20. Verwendung nach Anspruch 20, **dadurch gekennzeichnet, dass** die farb- und/oder effektgebenden Beschichtungsstoffe der Herstellung von farb- und/oder effektgebenden Mehrschichtlackierungen dienen.

21. Verwendung nach der an einem der Ansprüche 18 bis 21, **dadurch gekennzeichnet, dass** die Beschichtungsstoffe, Klebstoffe und Dichtungsmassen für das Lackieren, Verkleben und Abdichten von Kraftfahrzeugkarosserien und Teilen hiervon, Kraftfahrzeugen im Innen- und Außenbereich, Bauwerken im Innen- und Außenbereich, Türen, Fenstern, Möbeln und Glashohlkörpern sowie im Rahmen der industriellen Lackierung für das Lackieren, Verkleben und Abdichten von Kleinteilen, Coils, Container, Emballagen, elektrotechnischen Bauteilen und weißer Ware verwendet werden.

22. Nicht wässrige, farb- und/oder effektgebende Beschichtungsstoffe, enthaltend
(I) mindestens ein selbstvemetzendes, verzweigtes Polyurethan gemäß einem der Ansprüche 1 bis 16 und/oder mindestens ein gemäß Anspruch 17 hergestelltes Polyurethan,
(II) mindestens ein farb- und/oder effektgebendes Pigment und
(III) mindestens einen Celluloseester.

## Claims

1. Self-crosslinking, branched polyurethane preparable by reacting
(A) at least one hydroxyl-terminated polyester with a number-average molecular weight of from 500 to 4000 daltons, containing, based on the polyester (A),
(a1) from 60 to 95% by weight of structural units derived from aliphatic starting products and
(a2) from 5 to 40% by weight of structural units derived from aromatic starting products
with
(B) at least one partially blocked polyisocyanate containing on average per molecule more than 1.5 and less than 3 free isocyanate groups,
the equivalents ratio of free isocyanate groups in the polyisocyanate (B) to hydroxyl groups in the polyester (A) being > 1, to give an isocyanato-terminated polyurethane prepolymer which is chain-extended and/or blocked with
(C) at least one compound containing on average per molecule at least two isocyanate-reactive functional groups.

2. Polyurethane according to Claim 1, **characterized in that** the hydroxyl-terminated polyester has a number-average molecular weight of from 800 to 3000 daltons.

3. Polyurethane according to Claim 1 or 2, **characterized in that** the hydroxyl-terminated polyester (A) contains, based on (A), from 70 to 92% by weight of structural units (a1) and from 8 to 30% by weight of structural units (a2).

4. Polyurethane according to any of Claims 1 to 3, **characterized in that** the weight ratio of structural units (a1) derived from aliphatic dicarboxylic acids and/or dicarboxylic acid derivatives to structural units (a2) derived from aromatic dicarboxylic acids and/or dicarboxylic acid derivatives is from 1.5:1 to 5:1.

5. Polyurethane according to any of Claims 1 to 4, **characterized in that** the partially blocked polyisocyanate (B) contains on average per molecule more than 1.9 and less than 2.5 free isocyanate groups.

6. Polyurethane according to any of Claims 1 to 5, **characterized in that** the partially blocked polyisocyanate (B) is selected from the group consisting of partially blocked polyisocyanates containing isocyanurate, biuret, allophanate, iminooxadiazinedione, urethane, carbodiimide, urea, and uretdione groups.

7. Polyurethane according to Claim 6, **characterized in that** the partially blocked polyisocyanate (B) is preparable from diisocyanates.

8. Polyurethane according to Claim 7, **characterized in that** the diisocyanates are selected from the group consisting of isophorone diisocyanate (i.e., 5-isocyanato-1-isocyanatomethyl-1,3,3-trimethylcyclohexane), 5-isocyanato-1-(2-isocyanatoeth-1-yl)-1,3,3-trimethylcyclohexane, 5-isocyanato-1-(3-isocyanatoprop-1-yl)-1,3,3-trimethylcyclohexane, 5-isocyanato-(4-isocyanatobut-1-yl)-1,3,3-trimethylcyclohexane, 1-isocyanato-2-(3-isocyanatoprop-1-yl)cyclohexane, 1-isocyanato-2-(3-isocyanatoeth-1-yl)cyclohexane, 1-isocyanato-2-(4-isocyanatobut-1-yl)cyclohexane, 1,2-diisocyanatocyclobutane, 1,3-diisocyanatocyclobutane, 1,2-diisocyanatocyclopentane, 1,3-diisocyanatocyclopentane, 1,2-diisocyanatocyclohexane, 1,3-diisocyanatocyclohexane, 1,4-diisocyanatocyclohexane, dicyclohexylmethane 2,4'-diisocyanate, trimethylene diisocyanate, tetramethylene diisocyanate, pentamethylene diisocyanate, hexamethylene diisocyanate, ethylethylene diisocyanate, trimethylhexane diisocyanate, heptamethylene diisocyanate, 2-heptyl-3,4-bis(9-isocyanatononyl)-1-pentylcyclohexane, 1,2-, 1,4-, and 1,3-bis(isocyanatomethyl)cyclohexane, 1,2-, 1,4-, and 1,3-bis (2-isocyanatoeth-1-yl)cyclohexane, 1,3-bis(3-isocyanatoprop-1-yl)cyclohexane, 1,2-, 1,4- or 1,3-bis(4-isocyanatobuty-1-yl)cyclohexane, liquid bis-(4-isocyanatocyclohexyl) methane with a trans/ trans content of up to 30% by weight, tolylene diisocyanate, xylylene diisocyanate, bisphenylene diisocyanate, naphthylene diisocyanate or diphenylmethane diisocyanate.

9. Polyurethane according to Claim 8, **characterized in that** the diisocyanates are selected from the group consisting of hexamethylene diisocyanate, isophorone diisocyanate, and bis (4-isocyanatocyclohexyl)methane with a trans/trans content of up to 30% by weight.

10. Polyurethane according to any of Claims 1 to 9, **characterized in that** the blocking agents are selected from the group consisting of
(i) phenols, such as phenol, cresol, xylenol, nitrophenol, chlorophenol, ethylphenol, t-butylphenol, hydroxybenzoic acid, esters of this acid, or 2,5-di-tert-butyl-4-hydroxytoluene;
(ii) lactams, such as ε-caprolactam, δ-valerolactam, γ-butyrolactam or β-propiolactam;
(iii) active methylenic compounds, such as diethyl malonate, dimethyl malonate, ethyl or methyl acetoacetate, or acetylacetone;
(iv) alcohols, such as methanol, ethanol, n-propanol, isopropanol, n-butanol, isobutanol, t-butanol, n-amyl alcohol, t-amyl alcohol, lauryl alcohol, ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, propylene glycol monomethyl ether, methoxymethanol, glycolic acid, glycolic esters, lactic acid, lactic esters, methylolurea, methylolmelamine, diacetone alcohol, ethylenechlorohydrin, ethylenebromohydrin, 1,3-dichloro-2-propanol, 1,4-cyclohexyldimethanol or acetocyanohydrin;
(v) mercaptans, such as butyl mercaptan, hexyl mercaptan, t-butyl mercaptan, t-dodecyl mercaptan, 2-mercaptobenzothiazole, thiophenol, methylthiophenol or ethylthiophenol;
(vi) acid amides, such as acetoanilide, acetoanisidinamide, acrylamide, methacrylamide, acetamide, stearamide or benzamide;
(vii) imides, such as succinimide, phthalimide or maleimide;
(viii) amines, such as diphenylamine, phenylnaphthylamine, xylidine, N-phenylxylidine, carbazole, aniline, naphthylamine, butylamine, dibutylamine or butylphenylamine;
(ix) imidazoles, such as imidazole or 2-ethylimidazole;
(x) ureas, such as urea, thiourea, ethyleneurea, ethylenethiourea or 1,3-diphenylurea;
(xi) carbamates, such as phenyl N-phenylcarbamate or 2-oxazolidone;
(xii) imines, such as ethyleneimine;
(xiii) oximes, such as acetone oxime, formaldoxime, acetaldoxime, acetoxime, methyl ethyl ketoxime, diisobutyl ketoxime, diacetyl monoxime, benzophenone oxime or chlorohexanone oximes;
(xiv) salts of sulfurous acid, such as sodium bisulfite or potassium bisulfite;
(xv) hydroxamic esters, such as benzyl methacrylohydroxamate (BMH) or allyl methacrylohydroxamate; or
(xvi) substituted pyrazoles and triazoles; and also
(xvii) mixtures of these blocking agents.

11. Polyurethane according to Claim 10, **characterized in that** the blocking agents are selected from the group consisting of methanol, ethanol, n-propanol, isopropanol, n-butanol, isobutanol, t-butanol, n-amyl alcohol, t-amyl alcohol, n-hexanol, and methyl ethyl ketoxime.

12. Polyurethane according to any of Claims 1 to 11, **characterized in that** the equivalents ratio of free isocyanate groups in (B) to hydroxyl groups in (A) is > 1.2.

13. Polyurethane according to any of Claims 1 to 12, **characterized in that** the compounds (C) contain per molecule three isocyanate-reactive functional groups.

14. Polyurethane according to Claim 13, **characterized in that** the isocyanate-reactive functional groups are selected from the group consisting of hydroxyl groups, thiol groups, and primary and secondary amino groups.

15. Polyurethane according to Claim 14, **characterized in that** the isocyanate-reactive functional groups are selected from hydroxyl groups and secondary amino groups.

16. Polyurethane according to Claim 15, **characterized in that** the compounds (C) are amino alcohols.

17. Process for preparing polyurethanes according to any of Claims 1 to 16, **characterized in that**
(A) at least one hydroxyl-terminated polyester with a number-average molecular weight of from 500 to 4000 daltons, containing, based on the polyester (A),
(a1) from 60 to 95% by weight of structural units derived from aliphatic starting products and
(a2) from 5 to 40% by weight of structural units derived from aromatic starting products,
is reacted with
(B) at least one partially blocked polyisocyanate containing on average per molecule more than 1.5 and less than 3 free isocyanate groups,
the equivalents ratio of free isocyanate groups in the polyisocyanate (B) to hydroxyl groups in the polyester (A) being > 1, to give an isocyanato-terminated polyurethane prepolymer which is chain-extended and/or blocked with
(C) at least one compound containing on average per molecule at least two isocyanate-reactive functional groups.

18. Use of the polyurethane according to any of Claims 1 to 16 or of the polyurethane prepared by the process according to Claim 17 as a binder in coating materials, adhesives, and sealing compounds.

19. Use according to Claim 18, **characterized in that** the coating materials are nonaqueous color and/or effect coating materials.

20. Use according to Claim 19, **characterized in that** the color and/or effect coating materials serve for producing multicoat color and/or effect paint systems.

21. Use according to any of Claims 18 to 20, **characterized in that** the coating materials, adhesives, and sealing compounds are used for the coating, bonding, and sealing of motor vehicle bodies and parts thereof, the interior and exterior of motor vehicles, the inside and outside of buildings, doors, windows, furniture, and hollow glass articles, and, in the context of industrial coating, for the coating, bonding, and sealing of small parts, coils, containers, packaging, electrical components, and white goods.

22. Non-aqueous color and/or effect coating material comprising
(I) at least one self-crosslinking, branched polyurethane according to any of Claims 1 to 16 and/or at least one polyurethane prepared according to Claim 17,
(II) at least one color and/or effect pigment, and
(III) at least one cellulose ester.

## Revendications

1. Polyuréthanne ramifié autoréticulant, à préparer par mise en réaction :
(A) d'au moins un polyester terminé par des groupes hydroxyle d'un poids moléculaire en moyenne numérique de 500 à 4000 Dalton, contenant, par rapport au polyester (A),
(a1) 60 à 95 % en poids d'unités structurelles qui sont dérivées de produits de départ aliphatiques, et
(a2) 5 à 40 % en poids d'unités structurelles qui sont dérivées de produits de départ aromatiques,
avec
(B) au moins un polyisocyanate partiellement bloqué qui présente en moyenne statistique plus de 1,5 et moins de 3 groupes isocyanate libres dans la molécule,
le rapport d'équivalent des groupes isocyanate libres dans le polyisocyanate (B) aux groupes hydroxyle dans le polyester (A) > 1, en un prépolymère de polyuréthanne terminé par des groupes isocyanate qui subit un allongement de chaîne ou un blocage avec
(C) au moins un composé qui contient en moyenne statistique au moins deux groupes fonctionnels réactifs aux isocyanates dans la molécule.

2. Polyuréthanne selon la revendication 1, **caractérisé en ce que** le polyester terminé par des groupes hydroxyle présente un poids moléculaire en moyenne numérique de 800 à 3000 Dalton.

3. Polyuréthanne selon l'une des revendications 1 ou 2, **caractérisé en ce que** le polyester (A) terminé par des groupes hydroxyle contient, par rapport à (A), 70 à 92% en poids d'unités structurelles (a1) et 8 à 30% en poids d'unités structurelles (a2).

4. Polyuréthanne selon l'une des revendications 1 à 3, **caractérisé en ce que** le rapport pondéral des unités structurelles (a1) qui sont dérivées d'acides dicarboxyliques et/ou de dérivés carboxyliques aliphatiques aux unités structurelles (a2) qui sont dérivées d'acides dicarboxyliques et/ou de dérivés dicarboxyliques aromatiques se situe à 1,5: 1 à 5:1.

5. Polyuréthanne selon l'une des revendications 1 à 4, **caractérisé en ce que** le polyisocyanate (B) partiellement bloqué présente en moyenne statistique plus de 1,9 et moins de 2,5 groupes isocyanate libres dans la molécule.

6. Polyuréthanne selon l'une des revendications 1 à 5, **caractérisé en ce que** le polyisocyanate (B) partiellement bloqué est sélectionné dans le groupe composé de polyisocyanates partiellement bloqués contenant des groupes isocyanurate, biuret, allophanate, iminooxadiazindione, uréthanne, carbodiimide, urée et uretdione.

7. Polyuréthanne selon la revendication 6, **caractérisé en ce que** le polyisocyanate (B) partiellement bloqué peut être préparé à partir de diisocyanates.

8. Polyuréthanne selon la revendication 7, **caractérisé en ce que** les diisocyanates sont sélectionnés dans le groupe composé du diisocyanate d'isophorone (= 5-isocyanato-1-isocyanatométhyl-1,3,3-triméthylcyclohexane), 5-isocyanato-1-(2-isocyanatoéth-1-yl)-1,3,3-triméthylcyclohexane, 5-isocyanato-1-(3-isocyanatoprop-1-yl)-1,3,3-triméthylcyclohexane, 5-isocyanato-(4-isocyanatobut-leyl)-1,3,3-triméthylcyclohexane, 1-isocyanato-2-(3-isocyanatoprop-1-yl)-cyclohexane, 1-isocyanato-2-(3-isocyanatoéth-1-yl)-cyclohexane, 1-isocyanato-2-(4-isocyanatobut-1-yl)-cyclohexane, 1,2-diisocyanatocyclobutane, 1,3-diisocyanatocyclobutane, 1,2-diisocyanatocyclopentane, 1,3-diisocyanatocyclopentane, 1,2-diisocyanatocyclohexane, 1,3-diisocyanatocyclohexane, 1,4-diisocyanatocyclohexane, dicyclohexylméthane-2,4'-diisocyanate, triméthylènediisocyanate, tétraméthylènediisocyanate, pentaméthylènediisocyanate, hexaméthylènediisocyanate, éthyléthylènediisocyanate, triméthylhexanediisocyanate, heptaneméthylènediisocyanate, 2-heptyl-3,4-bis(9-isocyanatononyl)-1-pentylcyclohexane, 1,2-, 1,4- et 1,3-bis(isocyanatométhyl)cyclohexane, 1,2-, 1,4- et 1,3-bis(2-isocyanatoéth-1-yl)cyclohexane, 1,3-bis(3-isocyanatoprop-1-yl-cyclohexane, 1,2-, 1,4- ou 1,3-bis(4-isocyanatobut-1-yl)cyclohexane, bis(4-isocyanatocyclohexyl)méthane liquide d'une teneur trans/trans de 30% en poids maximum de diisocyanate de toluylène, de diisocyanate de xylylène, de diisocyanate de bisphénylène, de diisocyanate de napthylène ou de diisocyanate de diphénylméthane.

9. Polyuréthanne selon la revendication 8, **caractérisé en ce que** les diisocyanates sont sélectionnés dans le groupe composé du diisocyanate d'hexaméthylène, du diisocyanate d'isophorone et du bis(4-isocyanatocyclohexyl)méthane d'une teneur trans/trans de 30% en poids maximum.

10. Polyuréthanne selon l'une des revendications 1 à 9, **caractérisé en ce que** les agents de blocage sont sélectionnés dans le groupe composé
(i) de phénols comme le phénol, le crésol, le xylénol, le nitrophénol, le chlorophénol, l'éthylphénol, le tert.-butylphénol, l'acide hydroxybenzoïque, les esters de cet acide ou le 2,5-di-tert.-butyl-4-hydroxytoluène;
(ii) de lactames comme l'ε-caprolactame, le δ-valérolactame, le γ-butyrolactame ou le β-propiolactame;
(iii) de composés méthyléniques actifs comme le diéthylmalonate, le diméthylmalonate, l'éthyl- ou le méthylester d'acide acétacétique ou l'acétylacétone;
(iv) d'alcools comme le méthanol, l'éthanol, le n-propanol, l'isopropanol, le n-butanol, l'isobutanol, le t-butanol, l'alcool n-amylique, l'alcool t-amylique, le n-hexanol, l'alcool laurylique, le monométhyléther d'éthylèneglycol, le monoéthyléther d'éthylèneglycol, le monopropyléther d'éthylèneglycol, le monobutyléther d'éthylèneglycol, le monométhyléther de diéthylèneglycol, le monoéthyléther de diéthylèneglycol, le monométhyléther de propylèneglycol, le méthoxyméthanol, l'acide glycolique, l'ester d'acide glycolique, l'acide lactique, l'ester d'acide lactique, la méthylolurée, la méthylolmélamine, l'alcool de diacétone, l'éthylènechlorhydrine, l'éthylènebromhydrine, le 1,3-dichloro-2-propanol, le 1,4-cyclohexyldiméthanol ou l'acétocyanhydrine;
(v) de mercaptans comme le butylmercaptan, l'hexylmercaptan, le t-butylmercaptan, le t-dodécylmercaptan, le 2-mercaptobenzothiazole, le thiophénol, le méthylthiophénol ou l'éthylthiophénol;
(vi) d'amides acides comme l'acétoanilide, l'acétoanisidinamide, l'acrylamide, le méthacrylamide, l'amide acétique, l'acide stéarique ou le benzamide;
(vii) d'imides comme le succinimide, le phtalimide ou le maléidimide;
(viii) d'amines comme la diphénylamine, la phénylnaphtylamine, la xylidine, la N-phénylxylidine, le carbazole, l'aniline, la naphtylamine, la butylamine, la dibutylamine ou la butylphénylamine;
(ix) d'imidazoles comme l'imidazole ou le 2-éthylimidazole;
(x) d'urées comme l'urée, la thio-urée, l'éthylèneeurée, l'éthytlènethio-urée ou la 1,3)diphénylurée;
(xi) de carbamates comme le phénylester d'acide N-phénylcarbamidique ou le 2-oxazolidone;
(xii) d'imines comme l'éthylèneeimine;
(xiii) d'oximes comme l'acétonoxime, le formaldoxime, l'acétaldoxime, l'acétoxime, la méthyléthylcétoxime, le diisobutylcétoxime, le diacétylmonoxime, le benzophénonoxime ou les chlorohexanonoximes;
(xiv) de sels de l'acide sulfureux comme le bisulfite de sodium ou le bisulfite de potassium;
(xv) d'esters d'acide hydroxamique comme le méthacrylohydroxamate benzylique (BMH) ou le méthacrylohydroxamate allylique; ou
(xvi) de pyrazoles et triazoles substitués ainsi que
(xvii) de mélanges de ces agents de blocage.

11. Polyuréthanne selon la revendication 10, **caractérisé en ce que** les agents de blocage sont sélectionnés dans le groupe composé du méthanol, de l'éthanol, du n-propanol, d'isopropanol, de n-butanol, d'isobutanol, de t-butanol, d'alcool n-amylique, d'alcool t-amylique, de n-hexanol, et de méthyléthylcétoxime.

12. Polyuréthanne selon l'une des revendications 1 à 11, **caractérisé en ce que** le rapport d'équivalent des groupes isocyanate libres dans (B) aux groupes hydroxyle dans (A) > 1,2.

13. Polyuréthanne selon l'une des revendications 1 à 12, **caractérisé en ce que** les composés (C) contiennent trois groupes fonctionnels réactifs aux isocyanates dans la molécule.

14. Polyuréthanne selon la revendication 13, **caractérisé en ce que** les groupes fonctionnels réactifs aux isocyanates sont sélectionnés dans le groupe composé des groupes hydroxyle, des groupes thiol et des groupes amino primaires et secondaires.

15. Polyuréthanne selon la revendication 14, **caractérisé en ce que** les groupes fonctionnels réactifs aux isocyanates sont sélectionnés dans les groupes hydroxyle et les groupes amino secondaires.

16. Polyuréthanne selon la revendication 15, **caractérisé en ce que** les composés (C) sont des alcools aminés.

17. Procédé de préparation de polyuréthannes selon l'une des revendications 1 à 16, **caractérisé par** la mise en réaction :
(A) d'au moins un polyester terminé par des groupes hydroxyle d'un poids moléculaire en moyenne numérique de 500 à 4000 Dalton, contenant, par rapport au polyester (A),
(a1) 60 à 95 % en poids d'unités structurelles qui sont dérivées de produits de départ aliphatiques, et
(a2) 5 à 40 % en poids d'unités structurelles qui sont dérivées de produits de départ aromatiques,
avec
(B) au moins un polyisocyanate partiellement bloqué qui présente en moyenne statistique plus de 1,5 et moins de 3 groupes isocyanate libres dans la molécule
le rapport d'équivalent des groupes isocyanate libres dans le polyisocyanate (B) aux groupes hydroxyle dans le polyester (A) > 1, en un prépolymère de polyuréthanne terminés par des groupes isocyanate qui subit un allongement de chaîne ou un blocage avec
(C) au moins un composé qui contient en moyenne statistique au moins deux groupes fonctionnels réactifs aux isocyanates dans la molécule.

18. Utilisation de polyuréthanne selon l'une des revendications 1 à 16 ou du polyuréthanne préparé selon le procédé conforme à la revendication 17 comme liant dans les revêtements, adhésifs et masses d'étanchéité.

19. Utilisation selon la revendication 18, **caractérisée en ce que** les revêtements sont des substances de revêtement non aqueuses conférant une couleur et/ou un effet.

20. Utilisation selon la revendication 20, **caractérisée en ce que** les substances de revêtement conférant une couleur et/ou un effet servent à la fabrication de peintures en plusieurs couches conférant une couleur et/ou un effet.

21. Utilisation selon l'une des revendications 18 à 21, **caractérisée en ce que** les substances de revêtement, adhésifs et masses d'étanchéité sont utilisés pour la peinture, le collage et l'étanchéité de carrosseries automobiles et de parties de celles-ci, de véhicules automobiles à l'intérieur et à l'extérieur, de travaux de construction à l'intérieur et à l'extérieur, de portes, fenêtres, meubles et corps creux en verre ainsi que dans le cadre de la peinture industrielle pour la peinture, le collage et l'étanchéité de petites pièces, de bobines, de conteneurs, d'emballages, de pièces électrotechniques et de produits blancs.

22. Substances de revêtement non aqueuses conférant une couleur et/ou un effet contenant :
(I) au moins un polyuréthanne ramifié autoréticulant selon l'une des revendications 1 à 16 et/ou au moins un polyuréthanne préparé selon la revendication 17;
(II) au moins un pigment conférant une couleur et/ou un effet et
(III) au moins un ester de cellulose.
